# EUROPEAN PATENT SPECIFICATION

(11) **EP 3 264 540 B1**
(45) Date of publication and mention of the grant of the patent: **26.02.2020**
(21) Application number: 16001475.9
(22) Date of filing: 01.07.2016
(51) Int. Cl.: H01S 3/13, H01S 3/00, G01J 11/00, H01S 3/23

(54) **DEVICE AND METHOD FOR DETERMINING A TEMPORAL RELATIONSHIP OF LASER PULSES, AND APPLICATIONS THEREOF**
VORRICHTUNG UND VERFAHREN ZUR BESTIMMUNG EINER ZEITLICHEN BEZIEHUNG VON LASERPULSEN UND ANWENDUNGEN DAVON
DISPOSITIF ET PROCÉDÉ DE DÉTERMINATION D'UNE RELATION TEMPORELLE D'IMPULSIONS LASER ET LEURS APPLICATIONS

(43) Date of publication of application: 03.01.2018
(73) Proprietor: Deutsches Elektronen-Synchrotron DESY, 22607 Hamburg (DE)
(72) Inventor: Rossi, Giulio Maria, 22607 Hamburg (DE); Mainz, Roland, 22607 Hamburg (DE); Kärtner, Franz Xaver, 22607 Hamburg (DE); Mücke, Oliver D., 22607 Hamburg (DE); Cirmi, Giovanni, 22607 Hamburg (DE)
(74) Representative: v. Bezold & Partner Patentanwälte - PartG mbB

(56) References cited:
- SCHULZ S ET AL: "Femtosecond-precision synchronization of the pump-probe optical laser for user experiments at FLASH", OPTOMECHATRONIC MICRO/NANO DEVICES AND COMPONENTS III : 8 - 10 OCTOBER 2007, LAUSANNE, SWITZERLAND; [PROCEEDINGS OF SPIE , ISSN 0277-786X], SPIE, BELLINGHAM, WASH, vol. 8778, 3 May 2013 (2013-05-03), pages 87780R-87780R, XP060027141, DOI: 10.1117/12.2021572 ISBN: 978-1-62841-730-2
- JONATHAN A COX ET AL: "Complete characterization of quantum-limited timing jitter in passively mode-locked fiber lasers", OPTICS LETTERS, OPTICAL SOCIETY OF AMERICA, US, vol. 35, no. 20, 15 October 2010 (2010-10-15), pages 3522-3524, XP001558076, ISSN: 0146-9592, DOI: 10.1364/OL.35.003522
- SHU-WEI HUANG ET AL: "Ultrabroadband optical parametric chirped pulse amplifier system for single-cycle waveform synthesis", CONFERENCE ON LASERS AND ELECTRO-OPTICS (CLEO) AND QUANTUM ELECTRONICS AND LASER SCIENCE CONFERENCE (QELS), 2010 : 16 - 21 MAY 2010, SAN JOSE, CA, USA, IEEE, PISCATAWAY, NJ , USA, 16 May 2010 (2010-05-16), pages 1-2, XP031700937, ISBN: 978-1-55752-890-2
- T. R. SCHIBLI ET AL: "Attosecond active synchronization of passively mode-locked lasers by balanced cross correlation", OPTICS LETTERS, vol. 28, no. 11, 1 June 2003 (2003-06-01), page 947, XP055214412, ISSN: 0146-9592, DOI: 10.1364/OL.28.000947

## Description

The invention relates to a laser pulse detector device for determining a temporal relationship of laser pulses, in particular a laser pulse detector device for measuring and/or adjusting the temporal relationship of the laser pulses. Furthermore, the invention relates to a laser apparatus, including pulsed laser sources for creating sequences of first and second laser pulses and the laser pulse detector device for determining the temporal relationship of the first and second laser pulses. Furthermore, the invention relates to a laser pulse detection method for determining, in particular for measuring and/or adjusting a temporal relationship of laser pulses. Applications of the invention are available in particular in the techniques of optical parametric amplification and optical waveform synthesizers.

It is generally known that ultrashort laser pulses can be amplified with high pulse energy in the mJ range by optical parametric chirped-pulse amplification (OP(CP)A). In particular, the OP(CP)A technique allows for transferring energy from laser pulses with durations ranging from tens of femto-seconds to picoseconds and even nanoseconds (pump pulses) into ultrashort pulses with compressed durations of few femto-seconds (seed pulses). Based on the OP(CP)A technique, optical waveforms can be synthesized, as described e.g. by S.-W. Huang et al. in "Nat. Phot." (vol. 5, No. 8, 2011), C. Manzoni in "Laser & Photonics Reviews" (vol. 9, No. 2, 2015) or O. D. Muecke in "IEEE JSTQE" (vol. 21, No. 5, 2015). An optical waveform synthesizer typically includes multiple OP(CP)A channels with different spectral characteristics, which are coherently superimposed for creating pulses with a desired optical waveform and spectral contents.

While efficient laser sources are available for generating the pump and seed pulses, a challenging restriction of the conventional OP(CP)A systems is the required timing synchronization of the pump and seed pulses. Every OPA amplifier requires in particular a spatial and temporal overlap of pulses of the pump beam and the seed beam.

Correspondingly, if an optical waveform synthesizer includes multiple OP(CP)A channels, the outputs of the different channels need to be synchronized as well. The beam paths of the individual channels, which may have a length of around 30 m, need to be exactly of the same length. A deviation of more than 100 nm would lead to an unsuccessful waveform synthesis from the individual pulses. For providing a sufficient timing synchronization of pump and seed beam pulses in an OP(CP)A system or laser pulses in channels of an optical waveform synthesizer, an active stabilization is required.

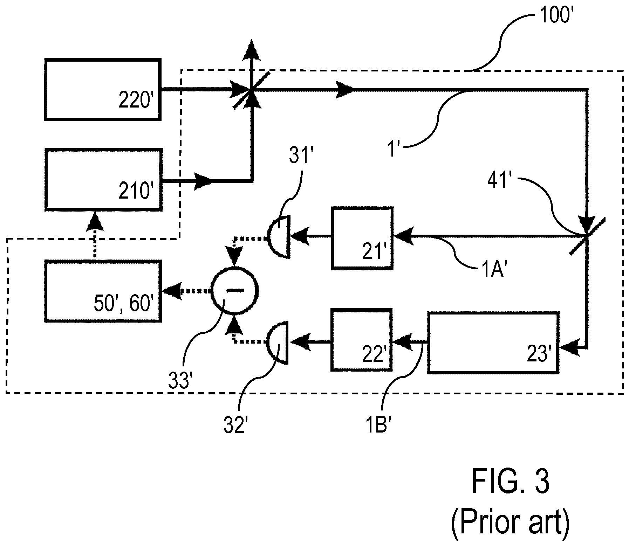

Figure 3 (prior art) illustrates an active stabilization scheme 100', which has been described by T. R. Schibli et al. in "Optics Letters", Vol. 28, 2003, p. 947-949. First and second laser pulses created by first and second laser sources 210', 220' are overlapped on a common beam path 1'. The beam of the superimposed first and second laser pulses is split onto two different arms 1A' and 1B' towards optically non-linear crystals 21', 22' being adapted for optically non-linear interactions (sum frequency generation) of the first and second laser pulses. The non-linear crystals 21', 22' act as cross-correlators, wherein the intensity of sum frequency signal pulses generated in each of the non-linear crystals 21', 22' depends on the temporal overlap of the first and second laser pulses. Due to the provision of a dispersive element 23' in the second arm 1B', the temporal relationship of the first and second laser pulses is changed in the second arm 1B'. By detecting the intensities of the signal pulses with photodiodes 31', 32' provided with band pass filters (not shown) and a subtraction of the intensities with subtraction unit 33', a sensor signal is obtained, which depends on the temporal relationship of the first and second laser pulses without being determined by intensity fluctuations of the first or second laser pulses (so-called common mode rejection). The sensor signal is supplied as an error signal to a feedback and setting unit 50', 60', which is adapted for setting a delay of the laser source 210' such that the temporal relationship of the first and second laser pulses is fixed.

Due to the balanced scheme of the detection with the photodiodes 31', 32', if the intensity of the first or second laser pulses is changed, the intensity of both sum frequency signal pulses will be changed, but the sensor signal will not be dependent on the input intensity change (so-called common mode rejection). The same is expected in theory also for a change in pointing (direction in which a laser beam is propagating). However, in practice, it has been found that the above effects of changing intensity or beam pointing can be suppressed by the set-up of Figure 3 in part only. Therefore, the conventional technique of T. R. Schibli et al. has a restricted precision and stability as well as a limited time resolution in measuring and adjusting the temporal relationship of the first and second laser pulses.

Similar challenges in adjusting the temporal relationship of the laser pulses occur in the field of coherent combination of laser pulses, e.g. with the phase-coherent addition of fiber-amplified ultrashort laser pulses (see E. Seise et al. in "Opt. Expr." 18 (26), 27827, 2010, or E. Seise et al. in "Opt. Lett." 36 (19), 3858, 2011) or the passive coherent combining of CEP-stable few-cycle pulses from a temporally divided hollow-core fiber compressor (see H. Jacqmin et al. in "Opt. Lett." 40 (5), 709, 2015). S. Schulz et al., Proc. of SPIE 8778 (2013) 87780R and J.A. Cox et al., Opt. Lett. 35(2010) 3522 disclose a balanced optical cross-correlator to determine the temporal spacing of laser pulses emitted by two different lasers using double-pass SFG in a single non-linear crystal and a single common beam path.

Objectives of the invention are to provide an improved laser pulse detector device and an improved laser pulse detection method for determining a temporal relationship of a first laser pulse and a second laser pulse, being capable of avoiding disadvantages of conventional techniques. In particular, the laser pulse detector device and the laser pulse detection method are to be capable of improved suppressing effects of intensity fluctuations or beam pointing fluctuations of the first or second laser pulses on the precision, stability and time resolution of a sensor signal representing the temporal relationship of the laser pulses. Furthermore, the objective of the invention is to provide an improved laser apparatus, e.g. an improved optical parametric amplifier or an improved optical waveform synthesizer, being capable of avoiding limitations of conventional techniques, in particular in terms of precision and reproducibility or superimposing laser pulses, e.g. for amplifying or waveform synthesizing purposes.

These objectives are solved with a laser pulse detection device, a laser apparatus and a laser pulse detection method comprising the features of the independent claims. Preferred embodiments and applications of the invention are defined in the dependent claims.

According to a first general aspect of the invention, the above objective is solved by a laser pulse detector device, which is adapted for determining (measuring and/or adjusting) a temporal relationship (or: time delay, relative arrival time) of a first laser pulse and a second laser pulse, in particular a temporal relationship of a sequence of first laser pulses relative to a sequence of second laser pulses. The term "laser pulses" is used here to denote any optical pulse created by a laser process or pulses derived therefrom by optically non-linear processes, like e.g. amplification, sum frequency generation and/or white light generation. Determining the temporal relationship includes detecting a mutual delay of the envelopes of the first and second laser pulses, resulting in an absolute measure providing the time delay and/or in an error signal, which can be used for adjusting the time delay, in particular synchronizing the first and second laser pulses.

The laser pulse detector device comprises a beam combiner device, which is arranged for overlapping the first and second laser pulses on a common beam path. The first and second laser pulses which are created by separate first and second laser source devices are superimposed by the beam combiner device, which includes e.g. at least one dichroic reflector, optionally combined with further deflection elements. Overlapping the first and second laser pulses on a common beam path comprises a creation of collinear beams of the first and second laser pulses with a spatial overlap, preferably a complete spatial overlap.

Furthermore, the laser pulse detector device comprises a non-linear crystal device including at least one optically non-linear crystal and being arranged for an optically non-linear interaction of the first and second laser pulses such that a first signal pulse (e.g. first sum frequency signal pulse) and a second signal pulse (e.g. second sum frequency signal pulse), preferably a sequence of first signal pulses and a sequence of second signal pulses, are created. Generally, the first and second signal pulses are created by an optically non-linear interaction of 2nd or 3rd order of the first and second laser pulses, like e.g. sum or difference frequency generation. The non-linear crystal device provides two interactions, including cross-correlation contributions, of the first and second laser pulses, wherein an intensity difference of the first and second signal pulses depends on the temporal relationship of the first and second laser pulses to be determined. The optically non-linear interaction for a particular application of the invention will be selected in particular in dependency on the wavelengths ranges to be detected with the sensor device.

According to the invention, the non-linear crystal device is arranged for creating the first and second signal pulses along the single common beam path, where the first and second laser pulses are overlapped. The non-linear crystal device is arranged in the common beam path of the first and second laser pulses. Furthermore, according to the invention, the non-linear crystal device is adapted for creating the first and second signal pulses with different spectral properties. Accordingly, the non-linear crystal device is adapted for a first interaction and a second interaction of the first and second laser pulses, wherein each of the first and second interactions result in signal pulses having different spectral content. The centre wavelength of the first signal pulses differs from the centre wavelength of the second signal pulses.

Furthermore, the inventive laser pulse detector device comprises a spectrally selective beam separator device, which is arranged downstream of the non-linear crystal device for spectrally separating the first and second signal pulses. The beam separator device is adapted for separating the first and second signal pulses in dependency on the centre wavelengths thereof and directing the spectrally separated first and second signal pulses onto different sensor beam paths (sensor arms). For sensing the spectrally separated signal pulses, the inventive laser pulse detector device includes a sensor device with two sensor units. Each of the sensor units is adapted for detecting one of the first and second signal pulses. The first signal pulses are directed by the beam separator device to the first sensor unit, and the second signal pulses are directed by the beam separator device to the second sensor unit. Furthermore, the sensor device is adapted for providing a sensor signal determined by the intensity difference of the first and second signal pulses. The sensor signal provides an absolute measure representing the temporal relationship of the first and second laser pulses and/or an error signal for an active stabilization, e.g. feedback or feedforward control of at least one of the first and second laser pulses.

According to a second general aspect of the invention, the above objective is solved by a laser apparatus, comprising a first laser source device for creating a sequence of first laser pulses, a second laser source device for creating a sequence of second laser pulses, and the laser pulse detection device according to the above first general aspect of the invention, being arranged for determining the temporal relationship of the first laser pulses and the second laser pulses, in particular measuring and/or adjusting the time delay between the first and second laser pulses.

According to a third general aspect of the invention, the above objective is solved by a laser pulse detection method for determining, in particular measuring and/or adjusting, the temporal relationship of a first laser pulse and a second laser pulse, in particular for determining a temporal relationship of a sequence of first laser pulses and a sequence of second laser pulses, comprising the steps of spatially overlapping the beams of the first and second laser pulses on one single common beam path, creating a first signal pulse (e.g. first sum frequency signal pulse) and a second signal pulse (e.g. second sum frequency signal pulse) by optically non-linear interactions of the first and second laser pulses while travelling along the common beam path, wherein the first and second signal pulses are created with different spectral properties and the intensity difference of the first and second signal pulses depends on the temporal relationship of the first and second laser pulses to be obtained, spectrally separating the first and second signal pulses and sensing the intensity difference of the first and second signal pulses.

According to the invention, both of the first and second interactions (including cross-correlation contributions) of the first and second laser pulses are obtained by the non-linear crystal device, while the first and second laser pulses travel along the common beam path. Contrary to the conventional technique of Figure 3, wherein cross-correlations are obtained in separate arms, the invention provides a configuration, wherein both optically non-linear interactions (e.g. sum frequency generation or difference frequency generation) are obtained in-line. The inventors have found that the provision of the non-linear crystals in separate arms with the conventional technique causes a substantial limitation for a balanced determination of the intensities of the first and second signal pulses as the separate arms never will be similar in reality. Therefore, the conventional technique does not allow a complete common mode rejection. On the contrary, the inventive technique does not use separate arms for creating the sum frequency signal pulses. Advantageously, this allows a much higher suppression of pointing or intensity fluctuations in the output sensor signal of the sensor device. Due to this improved suppression, the temporal relationship of the first and second laser pulses can be determined with improved precision, temporal stability and even time resolution, in particular allowing an improved active stabilization of the laser apparatus, like the optical parametric amplifier or the optical waveform synthesizer.

Advantageously, the invention allows measuring the relative arrival time (relative arrival time measurement - RAM) between laser pulses, in particular between broadband ultrashort laser pulses, in a robust fashion. The scheme is optically all-inline making it interferometrically stable and offers an intrinsic higher common mode rejection, e.g., from beam pointing or intensity fluctuations. The measured RAM variations can be used for an active feedback control of a delaying element keeping the RAM between the laser pulses locked and controllable. Furthermore, the invention allows synchronizing pump and seed pulses in an optical parametric (chirped-pulse) amplifier (OP(CP)A). Moreover, it can be used for coherent combination of two laser pulses, e.g. from two OPAs, thanks to sub-optical-cycle time resolution. Furthermore, high time resolution and single-shot measurement capability might be achieved, e.g., by using a gated integrator balanced detector circuit as the sensor device.

Generally, the non-linear crystal device is arranged in the common beam path for creating both of the first and second signal pulses with different spectral properties, which preferably travel parallel with the first and second laser pulses along the common beam path.

Preferably, the non-linear crystal device is adapted for conducting the optically non-linear interactions of the first and second laser pulses with a conversion efficiency such that temporal profiles of the first and second laser pulses are not or negligibly changed by the optically non-linear interaction of the first and second laser pulses. Advantageously, influences on the time delay determination are avoided. Alternatively, if the conversion efficiency is such that the temporal profiles of the first and second laser pulses are changed by the interactions, a corresponding correction can be applied in the time delay determination.

If the spectral phase of both of the first and second laser pulses will evolve during propagation in the different materials of the non-linear crystal device, this effect can be easily predicted, taken into account or corrected for by providing dispersive optics (e.g. chirped mirrors) before or in the non-linear crystal device.

According to a preferred embodiment of the invention, the non-linear crystal device comprises two separate non-linear crystals being serially arranged in-line in the common beam path, including a first non-linear crystal being adapted for creating the first signal pulse with a first centre wavelength and a second non-linear crystal being adapted for creating the second signal pulse having a second centre wavelength deviating from the first centre wavelength. The first and second non-linear crystals are made of different materials and/or are arranged with different phase-matching conditions such that the first and second signal pulses are created by sum frequency generation involving different spectral components of the first and second laser pulses. Providing the two separate non-linear crystals has advantages in terms of a facilitated tuning of each of the non-linear crystals to the spectral signal pulse characteristics to be obtained.

Alternatively, the non-linear crystal device may comprise one single non-linear crystal with multiple different poling sections only, e.g. one single chirped periodically-poled non-linear crystal, which is adapted for creating both of the first and second signal pulses by a single passage of the superimposed first and second laser pulses through the non-linear crystal. This embodiment of the invention has advantages in terms of the compact structure of the non-linear crystal device.

With further alternative variants of the invention, the non-linear crystal device may comprise more than two non-linear crystals, advantageously resulting in further degrees of freedom for designing the spectral features of the output of the non-linear crystal device, in particular resulting in more signal pulses with different spectral features and time transfer function (or time response. In particular, with such a configuration, it would be possible to have a time detection with low resolution but high dynamic range and one with narrow range but high resolution.

According to a further preferred feature of the invention, at least one dispersive element can be arranged in the common beam path for adjusting at least one of a time order and chirp of at least one of the first and second laser pulses. Advantageously, the at least one dispersive element, like e.g. a glass plate allows to change the dispersion in the common beam path and/or the time order of the first and second laser pulses to a desired state. With a preferred example, the at least one dispersive element is arranged at the upstream end (input) of the non-linear crystal device, e.g. in front of the first non-linear crystal. According to a particularly preferred variant, a first dispersive element is arranged before the first non-linear crystal, and a second dispersive element is arranged before the second non-linear crystal. With this embodiment, advantages for tuning the first and second laser pulses to the desired sum frequency generation in the first and second non-linear crystals are obtained.

Preferably, at least one of the first and second laser pulses is a chirped pulse. This can be achieved by the passage of the initial first and second laser pulses through the at least one dispersive element, and/or by initially creating at least one of the first and second laser pulses as chirped pulses.

As a further advantage of the invention, multiple options for providing the beam separator device are available, which can be selected in dependency on the particular application conditions of the laser pulse detector device and detection method. Preferably, the beam separator device is adapted for spectrally selective splitting the first and second signal pulses travelling on the common beam path. With this embodiment, the beam separator device is a wavelength-selective beam splitter device, including at least one dichroic splitter, optionally combined with at least one band pass filter, e.g. an interference filter. The at least one dichroic beam splitter is adapted for deflecting one of the first and second signal pulses to the first sensor unit of the sensor device and passing the other one of the first and second signal pulses to the second sensor unit of the sensor device. The at least one band pass filter can be arranged for suppressing residual spectral components in the separate sensor arms. This embodiment using the beam splitter device may have advantages for a detection of the first and second signal pulses with high signal-to-noise ratio (SNR).

Alternatively, the beam separator device may be adapted for spectrally selective dispersing the first and second signal pulses travelling along the common beam path. With this embodiment, the beam separator device is a beam dispersing device, including at least one grating and/or at least one prism being arranged for spectrally selective dispersing the beam of the superimposed first and second signal pulses from the common beam path toward the first and second sensor units. With a preferred example, the beam dispersing device comprises a spectrometer, e.g. a spectrometer with a grating and/or prism and a linear photodetector array collecting the first and second signal pulses in different photodetector array sections each providing one of the sensor units, or a spectrometer having two photodiodes placed in the Fourier plane of the spectrometer, each of the photodiodes providing one of the sensor units and being arranged for detecting a specific bandwidth (wavelength interval). This embodiment using the beam dispersing device may have advantages for a simple adaptation of the beam separating step to the particular spectral characteristics of the first and second signal pulses created by the non-linear crystal device.

According to a further preferred embodiment of the invention, the sensor device is adapted for a balanced operation, wherein the sensor signal is created by subtracting the output signals of the sensor units. Preferably, the sensor units comprise two photodiodes, the output signals of which being separately digitized, resulting in a digital difference sensor signal. This may bring some advantages in terms of signal processing. Alternatively, a plain balanced detector (two antiparallel photodiodes) can also be used, resulting in an analogue difference sensor signal. As a further alternative, the sensor device may include a subtraction unit calculating the intensity difference of the first and second signal pulses. Depending on the application conditions, the subtraction unit can be adapted for subtracting weighted output signals of the sensor units. As an example, one of the output signals can be multiplied with a calibration factor for a mutual adaptation of the output signals of the sensor units, advantageously resulting in an improved SNR of the difference sensor signal. Alternatively or additionally, the two intensities of the signal pulses can be equalized by changing the phase-matching bandwidth of the non-linear crystal, by attenuating one of the signals before it hits the sensor, and/or by using balancing in software, where one of the digitized signals of the sensor units is multiplied with a factor favorably close to one.

Advantageously, the laser pulse detection device of the invention can be adapted for different applications in a laser apparatus. Firstly, detecting the temporal relationship of the first and second laser pulses may comprise measuring the time delay between the first and second laser pulses. With a preferred example, the time delay can be measured as an absolute value for characterizing the current status or the dynamic behaviour of the laser apparatus and/or for providing a time reference in timing-sensitive measurements. As an example of characterizing the laser apparatus, the time dependency of the time delay can be measured and analysed, e.g. for characterizing the temporal and/or mechanical stability of the laser apparatus or for identifying effects deteriorating the stability. Furthermore, measuring the time delay can have advantages, if a feedback stabilization of the laser apparatus is impossible for technical reasons, but recording a time difference between signals is needed, e.g., for post-sorting of already acquired experimental data according to the simultaneously measured temporal delays using a timing tool (e.g., as done in free-electron laser pump-probe experiments).

Alternatively, with a particularly preferred embodiment of the invention, the laser pulse detection device is adapted for adjusting the temporal relationship of the first and second laser pulses, in particular for setting a fixed temporal relationship or synchronizing the first and second laser pulses. With this embodiment, the laser pulse detection device preferably includes a setting device for adjusting the temporal relationship of the first and second laser pulses and an active stabilization unit. The active stabilization unit is adapted for creating a drive signal for the setting device in order to achieve a stable temporal relationship of the first and second laser pulses by actively modifying the system. Active stabilization methods can include, but is not limited to feedback control (loop control without knowledge on system behaviour), feedforward (control with knowledge on system behaviour) and other methods. With a preferred example, the active stabilization unit is a feedback unit creating the drive signal for the setting device in dependency on the intensity difference of the first and second signal pulses, in particular in dependency on the sensor signal output of the sensor device. The setting device includes an actor influencing the temporal behaviour of at least one of the first and second laser pulses, e.g. influencing the repetition rate of at least one of the first and second laser source devices and/or introducing a time delay in the beam path of at least one of the first and second laser pulses before the combination thereof. The active stabilization unit can be adapted e.g. for synchronizing the first and second laser pulses or adjusting the first and second laser pulses such that they have a predetermined fixed or dynamically changing relative time delay.

According to preferred features of the invention, the setting device may comprise an optical delay line included in an input path of at least one of the first and second laser pulses and/or a repetition rate control device being coupled with at least one of the first and second laser source devices for controlling the repetition rate thereof.

With a preferred application of the invention, the laser apparatus is an optical parametric (chirped-pulse) amplifier, including the first laser source device, the second laser source device, the laser pulse detection device being arranged for adjusting the temporal relationship of the laser pulses created by the first and second laser source devices and an amplifier crystal device, including at least one amplifier crystal, being arranged for creating a sequence of amplified signal pulses by an optically non-linear interaction of the laser pulses of the first and second laser source devices.

The first laser source device comprises a pump laser system which is adapted for creating a sequence of pump laser pulses (first laser pulses), e. g having a duration in a range from 20 fs to 10 ns. With a preferred example, the pump is narrowband and compressed with a duration in a range from 100 fs to 200 fs, e.g. around 150 fs.

The second laser source device comprises a seed laser system being adapted for creating a sequence of broadband, ultrashort seed laser pulses, preferably having a compressed duration, chirped to match the pump pulse duration, e.g. below 10 fs (second laser pulses).

With a preferred alternative embodiment, the seed can be derived from the pump, e.g. by another frequency conversion in-between. If a white-light supercontinuum is driven in bulk material, which gives an additional dispersion, e.g. pulse-durations around 200 fs, this chirp is taken out, e.g. with chirped mirrors, to match the pump envelope pulse duration (amplification envelope). With a Fourier transform limit of the white-light e.g. around 6 fs, around 150 fs can be used for pump and seed (6 fs chirped to 150 fs). As a further alternative, a hollow-core fiber, filamentation in a gas cell, or another OPA (OPA chain) can be used for creating the seed.

With an alternative advantageous application of the invention, the laser apparatus is configured as an optical waveform synthesizer, including at least the first laser source device and the second laser source device providing two spectral channels for creating sequences of first and second laser pulses with different spectral characteristics and a pulse combiner, which is adapted for a coherent combination of the first and second laser pulses. Each of the first and second laser source devices includes an optical parametric (chirped-pulse) amplifier. Optionally, further laser source devices can be added for providing additional spectral channels, wherein the laser pulses created in the spectral channels are synchronized by at least one laser pulse detection device of the invention.

Advantageously, there are multiple options for providing the pump and seed laser systems, which may comprise two laser sources derived from one source and spectrally shifted by harmonic generation, two laser sources derived from one source and spectrally broadened by one or more gas-filled fibre or filamentation gas cells, two laser sources derived from one source and spectrally broadened by white-light generation in a bulk crystal, or two laser sources from two lasers, like e.g. fibre-lasers, being coherently combined with a pulse combiner, like a beam splitter, preferably a normal beam splitter without exploitation of polarization.

Further details and advantages of preferred embodiments of the invention are described in the following with reference to the attached drawings, which show in:
- Figure 1:: a schematic illustration of a laser pulse detector device according to a preferred embodiment of the invention;
- Figure 2:: a schematic illustration of an optical parametric amplifier according to a preferred embodiment of the invention, including the laser pulse detection device of claim 1; and
- Figure 3:: a schematic illustration of a conventional laser pulse detection device (prior art).

Advantageous features of preferred embodiments of the invention are described in the following with exemplary reference to a laser pulse detector device 100, being configured for synchronizing first and second laser pulses A, B by employing a feedback control (control loop). It is emphasized that the invention is not restricted to a laser pulse detector device including the feedback control for active stabilization. Alternatively, the invention can be implemented with a feedforward control for active stabilization, based on a model presentation of the laser pulse detector device, or without an active stabilization control, e.g. for measuring the time delay between the first and second laser pulses A, B. Furthermore, exemplary reference is made to the application of the laser pulse detection device 100 with an optical parametric amplifier 200. It is emphasized that the invention is not restricted to this application, but rather possible with other laser apparatuses, like e.g. an optical waveform synthesizer or an apparatus for coherent beam combination. Coherent beam combination of pulses with similar spectral content allows to scale up the pulse energy. One example would be using fiber lasers and amplifiers for creating the first and second laser pulses and exploiting their high average power, high repetition-rate capability and to overcome their intrinsically rather low peak power performance by coherently combining several similar laser sources. Details of sum frequency generation, optical parametric (chirped-pulse) amplification, creating nonlinear effects, PID, feedforward, feed-back or other active control schemes, or balanced light detection are not described as far as they are known as such from conventional techniques.

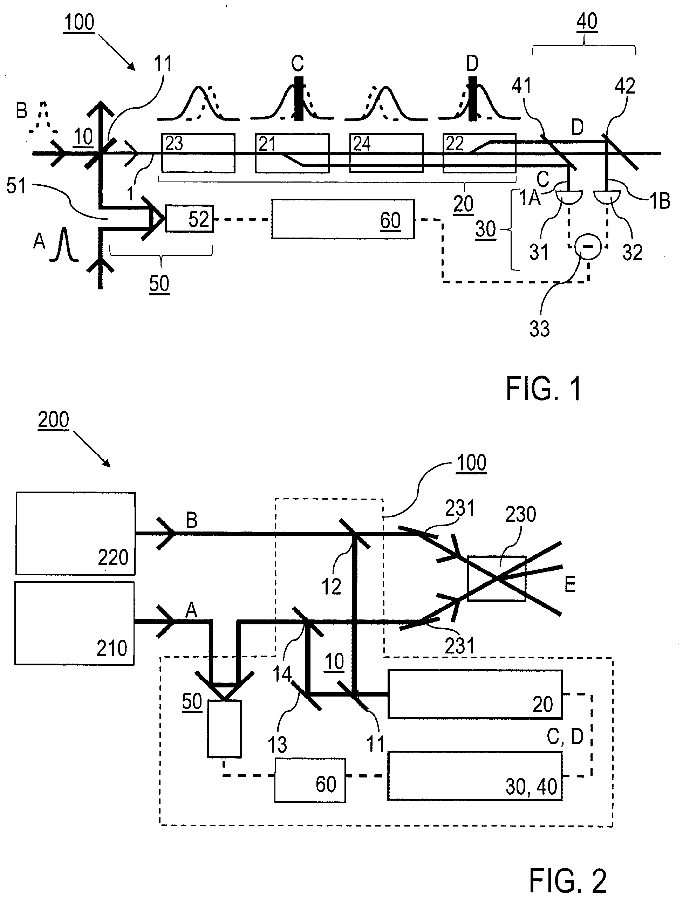

The laser pulse detector device 100 of Figure 1 comprises a beam combiner device 10, a non-linear crystal device 20, a sensor device 30, a spectrally selective beam separator device 40, a setting device 50 and an active stabilization unit (feedback unit) 60. The laser pulse detection device 100 of Figure 1 is adapted for synchronizing a sequence of first laser pulses A (shown with a drawn line) and a sequence of second laser pulses B (shown with a dashed line).

The beam combiner device 10 comprises e.g. a single semi-transparent mirror 11 as shown in Figure 1 or a more complex arrangement of semi-transparent and reflective mirrors 11 to 14 as shown in Figure 2. With the beam combiner device 10, the sequence of first laser pulses A and the sequence of second laser pulses B are superimposed onto one common beam path 1. In Figure 1, the common beam path 1 is shown as a straight beam path extending in one single longitudinal direction. With alternative embodiments of the invention, the common beam path 1 can be folded by folding mirrors (not shown), e.g. for obtaining a more compact structure.

The components of the non-linear crystal device 20 are arranged along the common beam path 1. They comprise in this order a first dispersive element 23, a first non-linear crystal 21, a second dispersive element 24 and a second non-linear crystal 22. The first and second non-linear crystals 21, 22 comprise e.g. BBO crystals having a thickness of e.g. 200 µm. The first and second dispersive elements 23, 24 comprise e.g. fused-silica plates having a thickness of 500 µm. The first non-linear crystal 21 is adapted for an optical, non-linear interaction of the laser pulses A, B for creating a first signal pulse C travelling along the common beam path 1 overlapped with the first and second laser pulses A, B. The second non-linear crystal 22 is adapted for another interaction of the first and second laser pulses A, B resulting in a sum frequency generation of a second signal pulse D having another centre wavelength compared with the first signal pulse C. The second signal pulse D also travels along the common beam path 1. Note that the beam paths of the first and second signal pulses C, D are illustrated in Figure 1 with a displacement relative to the common beam path 1 for illustrative purposes only. In reality, the common beam path includes the first and second pulses A, B and the first and second signal pulses C, D.

With a practical example shown by a pulse row in Figure 1, a chirp can be applied to one of the first and second laser pulses, e.g. the first laser pulses A, using the first dispersive element 23. Subsequently, the sum frequency generation in the first non-linear crystal 21 occurs between the second laser pulses B and a first spectral range of the first laser pulses A, thus creating the first signal pulses C. Subsequently, the first and second laser pulses are further shifted relative to each other and/or chirped, using the second dispersive element 24, so that the sum frequency generation in the second non-linear crystal 22 occurs between the second laser pulses B and a second spectral range of the first laser pulses A. Accordingly, the second signal pulses D are created with another spectral contents compared with the first signal pulses C. The first and second non-linear crystals 21, 22 and the first and second dispersive elements 23, 24 are tuned such that the first and second signal pulses C, D are created with predetermined different centre wavelengths e.g. at 400 nm and 420 nm.

The beam separator device 40 comprises a first dichroic mirror 41 being reflective for the first signal pulses C and transmissive for the first and second laser pulses A, B and the second signal pulses D and a second dichroic mirror 42 being reflective for the second signal pulses D and transmissive for the first and second laser pulses A, B. Accordingly, the first signal pulses C are reflected via a first sensor arm 1A to a first sensor unit 31 of the sensor device 30, while the second signal pulses D are reflected via a second sensor arm 1B to the second sensor unit 32. The sensor units 31, 32 comprise e.g. photodiodes. The electrical output signal generated by each of the sensor units 31, 32 represents the non-linear signal intensity, in particular determined by the non-linear cross-correlation of the first and second signal pulses, respectively. The analogue electrical output signals can be digitized before a subtraction thereof in the subtraction unit 33.

With the subtraction unit 33, the output signals of the sensor units 31, 32 are subtracted one from the other, in order to generate a sensor signal output. The sensor signal output represents the relative arrival time or time delay between the first and second laser pulses A, B. Advantageously, the sensor signal will look S-shaped and is linear to first approximation in the region around the zero crossing, i. e. includes a linear dependency on the time delay between the first and second laser pulses A, B. To determine the absolute time difference, the sensor signal curve can be measured and S-curved signal can be mapped to linear time. The sensor signal output can be chosen e.g. to be positive, when the first laser pulse A arrives before the second laser pulse B and to become negative when the first laser pulse A arrives after the second laser pulse B, or vice versa.

The sensor signal output is used for controlling the setting device 50, which comprises the optical delay line 51 with a moveable deflection mirror and a mirror drive 52, like a piezo-electric actuator. Preferably, the active stabilization unit 60 is arranged between the sensor device 30 and the setting device 50. The active stabilization unit 60 includes e.g. a circuitry running a feedback algorithm that creates a drive signal on the basis of the sensor signal output such that the time delay between the first and second laser pulses A, B is kept constant and equal to a desired value, e.g. zero. The circuitry comprises a digital system, like e.g. FPGA, PC, or microcontroller or a complete analogue feedback circuit (balanced PD plus PID with operational amplifiers).

As an important feature of the scheme in Figure 1, it is noted that the first and second sensor arms 1A, 1B deviate from the common beam path 1 and the fundamental first and second laser pulses A, B pass the beam separator device 40 without being deflected towards the sensor device 30. In other words, the beam separator device 40 is configured such that the first and second laser pulses A, B (completely or the main portion thereof) travel in another direction than the split or dispersed signal pulses C, D. On the downstream side of the beam separator device 40, the first and second laser pulses A, B can be relayed to a further application, e.g. for monitoring purposes, or collected with a beam dump.

The laser pulse detection device 100 of Figure 1 can be modified in particular with regard to the following features. The dispersive elements 23, 24 can be omitted if the dispersive function thereof can be fulfilled by the non-linear crystal 21, 22, or at least one of the laser pulses A, B is a chirped pulse. Furthermore, the non-linear crystals 21, 22 can be replaced by one single chirped periodically-poled non-linear crystal, made of e.g. lithium niobate or potassium titanyl phosphate. As a further alternative, more than two non-linear crystals can be provided. With regard to the beam separator device 40 and the sensor device 30, a spectrometer set-up can be provided, wherein the spectrometer grating is used for spectrally selective dispersing the first and second signal pulses C, D, and sections of the spectrometer sensor array are used as first and second sensor units. Furthermore, additional interference filters or bandpass filters can be provided for improving the separation of the first and second signal pulses C, D.

Figure 2 schematically illustrates an embodiment of an inventive laser apparatus comprising an optical parametric (chirped-pulse) amplifier (OP(CP)A) 200. For illustrative purposes, only the main components of the OPA 200, including the first laser source device 210, the second laser source device 220, the laser pulse detection device 100 and the amplifier crystal device 230 are illustrated. In practice, further components are provided as it is known from conventional OP(CP)As. The first laser source device 210 comprises a broadband seed laser source, like e.g. a white-light generation driven in bulk glass with a Ti-Sapphire laser system. The seed pulses (first laser pulses A) generated with the first laser source device 210 have a duration of e.g. 10 fs and a repetition rate of 1 kHz. The seed pulses are chirped to match pump envelope (> chirped to around 150 fs). The second laser source device 220 comprises e.g. a Ti-Sapphire system, creating pump pulses (second laser pulses B) with a duration of 150 fs and a repetition rate of 1 kHz.

The seed and pump pulses A, B are deflected with the mirrors 231 to the amplifier crystal device 230 which comprises one single amplifier crystal or a more complex arrangement of multiple amplifier crystals. By the parametric amplification of the seed pulses in the amplifier crystal device 230, the amplified pulses E are created, having a duration determined by the input pulse duration and the dispersion by the amplifier crystal and the same repetition rate as the seed and pump pulses A, B, wherein the pulse E duration can be afterwards recompressed to < 10 fs, e.g. in a range from 5 fs to 10 fs.

The temporal synchronization of the seed and pump pulses A, B for a simultaneous arrival at the amplifier crystal device 230 is obtained with the laser pulse detection device 100, comprising the beam combiner device 10, the non-linear crystal device 20, the beam separator and sensor devices 30, 40, the setting device 50 and the active stabilization unit 60, e.g. as described with reference to Figure 1. The beam combiner device 10 is illustrated with a more complex arrangement of semi-transmissive mirrors 11 to 14. Depending on the application, the active stabilization unit 60 and the setting device 50 are favourably delaying pump and/or seed.

With an alternative application of the inventive laser pulse detection device 100, an optical waveform synthesizer is designed similar to the scheme of Figure 2. With this application, the laser pulse source devices 210, 220 are replaced by optical parametric amplifiers each providing one spectral channel of the optical waveform synthesizer. Furthermore, the amplifier crystal device 230 is replaced by another beam combiner for superimposing the different spectral channels.

The laser pulse source devices 210, 220 for creating the pulses with different spectral content can be derived e.g. from the same laser/amplifier, spectrally shifted by harmonic generation and/or broadened by a hollow-core fiber or filamentation or by a white-light generation in bulk and parametric amplification or similar. If more than one HCFC is coherently combined, the inventive technique allows for CEP-stabilized output with scalable energy and/or spectral bandwidth.

## Claims

1. Laser pulse detector device (100) being configured for determining a temporal relationship of a first laser pulse (A) and a second laser pulse (B), comprising
- a beam combiner device (10) being arranged for overlapping the first and second laser pulses (A, B) on a common beam path (1),
- a non-linear crystal device (20) being arranged for creating a first signal pulse (C) and a second signal pulse (D) by optically non-linear interactions of the first and second laser pulses (A, B) along the common beam path (1), wherein an intensity difference of the first and second signal pulses (C, D) depends on the temporal relationship of the first and second laser pulses (A, B), wherein the first and second signal pulses (C, D) have different spectral properties and a centre wavelength of the first signal pulse (C) differs from a centre wavelength of the second signal pulse (D),
- a sensor device (30) including two sensor units (31, 32) each being arranged in a different sensor beam path (1A, 1B) for detecting one of the first and second signal pulses (C, D), wherein the sensor device (30) is adapted for providing a sensor signal output determined by the intensity difference of the first and second signal pulses (C, D), and
- a spectrally selective beam separator device (40) is arranged between the non-linear crystal device (20) and the two sensor units (31, 32) of the sensor device (30), wherein
- the spectrally selective beam separator device (40) is arranged for spectrally separating the first and second signal pulses (C, D) in dependency on the centre wavelengths thereof and directing the spectrally separated first and second signal pulses onto the different sensor beam paths (1A, 1B).

2. Laser pulse detection device according to claim 1, wherein the non-linear crystal device (20) includes
- a first non-linear crystal (21) being configured for creating the first signal pulse (C), and
- a second non-linear crystal (22) being configured for creating the second signal pulse (D), wherein
- the first and second non-linear crystals (21, 22) are arranged along the common beam path (1).

3. Laser pulse detection device according to claim 1, wherein the non-linear crystal device (20) includes
- one single non-linear crystal with multiple different poling sections, being configured for creating both of the first and second signal pulses (C, D).

4. Laser pulse detection device according to one of the foregoing claims, further including
- at least one dispersive element (23, 24) being arranged along the common beam path (1) for adjusting at least one of a time order and chirp of at least one of the first and second laser pulses (A, B).

5. Laser pulse detection device according to one of the foregoing claims, wherein the spectrally selective beam separator device (40) includes at least one of
- a beam splitter device (41) being arranged for spectrally selective splitting the first and second signal pulses (C, D) from the common beam path (1) towards the sensor units (31, 32), and
- a beam dispersing device, in particular a grating and/or prism, being arranged for spectrally selective dispersing the first and second signal pulses (C, D) from the common beam path (1) towards the sensor units (31, 32).

6. Laser pulse detection device according to one of the foregoing claims, wherein the sensor device (30) includes
- a subtraction unit (33) being arranged for providing the sensor signal output by subtracting output signals of the sensor units (31, 32).

7. Laser pulse detection device according to one of the foregoing claims, further including
- a setting device (50) being arranged for adjusting the temporal relationship of the first and second laser pulses (A, B), and
- an active stabilization unit (60) being arranged between the sensor device (30) and the setting device (50) for creating a drive signal.

8. Laser pulse detection device according to claim 7, wherein
- the active stabilization unit (60) is a feedback unit being arranged for creating the drive signal in dependency on the intensity difference of the first and second signal pulses (C, D) such that the first and second laser pulses (A, B) coincide or have a predetermined relative time delay.

9. Laser pulse detection device according to claim 7 or 8, wherein the setting device (50) includes at least one of
- an optical delay line (51) being arranged in an input path of one of the first and second laser pulses (A, B), and
- a repetition rate control device being arranged for controlling a repetition rate of a laser source device creating one of the first and second laser pulses (A, B).

10. Laser apparatus (200), comprising
- a first laser source device (210) being arranged for creating a sequence of first laser pulses (A),
- a second laser source device (220) being arranged for creating a sequence of second laser pulses (B), and
- a laser pulse detection device (100) according to one of the foregoing claims being arranged for determining the temporal relationship of the first laser pulses (A) and the second laser pulses (B).

11. Laser apparatus according to claim 10, wherein
- the first laser source device (210) comprises a pump laser system being arranged for creating a sequence of pump laser pulses providing the first laser pulses (A),
- the second laser source device (220) comprises a seed laser system being arranged for creating a sequence of seed laser pulses providing the second laser pulses (B), and
- the laser apparatus (200) further includes an amplifier crystal device (230) being arranged for creating a sequence of amplified signal and idler pulses by an optically non-linear interaction of the pump and seed pulses.

12. Laser apparatus according to claim 10, wherein
- the first laser source device (210) comprises at least one first optical parametric, especially chirped-pulse, amplifier being arranged for creating the sequence of first laser pulses (A),
- the second laser source device (220) comprises at least one second optical parametric, especially chirped-pulse, amplifier being arranged for creating the sequence of second laser pulses (B), and
- the laser apparatus is configured for a coherent combination of the first and second laser pulses (A, B).

13. Laser pulse detection method for determining a temporal relationship of a first laser pulse (A) and a second laser pulse (B), comprising
- overlapping the first and second laser pulses (A, B) on a common beam path (1),
- creating a first signal pulse (C) and a second signal pulse (D) with different spectral properties by optically non-linear interactions of the first and second laser pulses (A, B) along the common beam path (1), wherein an intensity difference of the first and second signal pulses (C, D) depends on the temporal relationship of the first and second laser pulses (A, B) and wherein a centre wavelength of the first signal pulse (C) differs from a centre wavelength of the second signal pulses (D), and
- sensing the intensity difference of the first and second signal pulses (C, D) in different sensor beam paths (1A, 1B), wherein
- the first and second signal pulses (C, D) are spectrally separated in dependency on the centre wavelengths thereof and directed onto the different sensor beam paths (1A, 1B) before detecting the intensity difference of the first and second signal pulses (C, D).

14. Method according to claim 13, including a further step of
- adjusting the temporal relationship of the first and second laser pulses (A, B) in dependency on the intensity difference of the first and second signal pulses (C, D).

15. Method according to claim 13 or 14, wherein
- the first and second signal pulses (C, D) are created with separate non-linear crystals arranged along the common beam path (1) or with one single non-linear crystal, in particular a chirped periodically-poled nonlinear crystal.

16. Method according to one of the claims 13 to 15, wherein
- the optically non-linear interaction of the first and second laser pulses (A, B) is conducted with a conversion efficiency such that temporal profiles of the first and second laser pulses (A, B) are not changed during the optically non-linear interaction of the first and second laser pulses (A, B).

17. Method according to one of the claims 13 to 16, wherein
- at least one of the first and second laser pulses (A, B) is a chirped pulse.

18. Method according to one of the claims 13 to 17, further including
- adjusting at least one of a time order and chirp of at least one of the first and second laser pulses (A, B).

19. Method according to one of the claims 14 to 18, wherein
- the step of adjusting the temporal relationship of the first and second laser pulses (A, B) is conducted using an active stabilization unit (60), in particular in dependency on the intensity difference of the first and second signal pulses (C, D) such that the first and second laser pulses (A, B) coincide or have a predetermined relative delay.

20. Method according to one of the claims 14 to 19, wherein
- the step of adjusting the temporal relationship of the first and second laser pulses (A, B) is conducted using at least one of an optical delay line being arranged in an input path of one of the first and second laser pulses (A, B) and a repetition rate control device being arranged for controlling a repetition rate of a laser source device creating one of the first and second laser pulses (A, B).

21. Method of using a laser pulse detection device according to one of the claims 1 to 9 for
- adjusting the temporal relationship of pump and seed pulses for optical parametric, especially chirped-pulse, amplification, or
- adjusting the temporal relationship of laser pulses coherently added.

## Patentansprüche

1. Laserpuls-Detektoreinrichtung (100), die zur Bestimmung einer zeitlichen Beziehung eines ersten Laserpulses (A) und eines zweiten Laserpulses (B) konfiguriert ist, umfassend
- eine Strahlkombiniereinrichtung (10), die zur Überlappung der ersten und zweiten Laserpulse (A, B) auf einem gemeinsamen Strahlengang (1) angeordnet ist,
- eine nichtlineare Kristalleinrichtung (20), die zur Erzeugung eines ersten Signalpulses (C) und eines zweiten Signalpulses (D) durch optisch nichtlineare Wechselwirkungen der ersten und zweiten Laserpulse (A, B) entlang des gemeinsamen Strahlengangs (1) angeordnet ist, wobei eine Intensitätsdifferenz der ersten und zweiten Signalpulse (C, D) von der zeitlichen Beziehung der ersten und zweiten Laserpulse (A, B) abhängt, wobei die ersten und zweiten Signalpulse (C, D) unterschiedliche spektrale Eigenschaften aufweisen und eine Mittenwellenlänge des ersten Signalpulses (C) von einer Mittenwellenlänge des zweiten Signalpulses (D) abweicht,
- eine Sensoreinrichtung (30), die zwei Sensoreinheiten (31, 32) enthält, die jeweils in einem unterschiedlichen Sensorstrahlengang (1A, 1B) angeordnet sind, um einen der ersten und zweiten Signalpulse (C, D) zu detektieren, wobei die Sensoreinrichtung (30) angepasst ist, eine Sensorsignalausgabe bereitzustellen, die durch die Intensitätsdifferenz der ersten und zweiten Signalpulse (C, D) bestimmt wird, und
- eine spektral selektive Strahltrenneinrichtung (40), die zwischen der nichtlinearen Kristalleinrichtung (20) und den beiden Sensoreinheiten (31, 32) der Sensoreinrichtung (30) angeordnet ist, wobei
- die spektral selektive Strahltrenneinrichtung (40) angeordnet ist, um die ersten und zweiten Signalpulse (C, D) in Abhängigkeit von deren Mittenwellenlängen spektral zu trennen und die spektral getrennten, ersten und zweiten Signalpulse auf die verschiedenen Sensorstrahlengänge (1A, 1B) zu lenken.

2. Laserpuls-Detektoreinrichtung gemäß Anspruch 1, wobei die nichtlineare Kristalleinrichtung (20) enthält
- einen ersten nichtlinearen Kristall (21), der zur Erzeugung des ersten Signalpulses (C) konfiguriert ist, und
- einen zweiten nichtlinearen Kristall (22), der zur Erzeugung des zweiten Signalpulses (D) konfiguriert ist, wobei
- die ersten und zweiten nichtlinearen Kristalle (21, 22) entlang des gemeinsamen Strahlenganges (1) angeordnet sind.

3. Laserpuls-Detektoreinrichtung gemäß Anspruch 1, wobei die nichtlineare Kristalleinrichtung (20) enthält
- einen einzigen nichtlinearen Kristall mit mehreren unterschiedlichen Polungsabschnitten, der für die Erzeugung von beiden der ersten und zweiten Signalpulse (C, D) konfiguriert ist.

4. Laserpuls-Detektoreinrichtung gemäß einem der vorhergehenden Ansprüche, des Weiteren enthaltend
- mindestens ein dispersives Element (23, 24), das entlang des gemeinsamen Strahlenganges (1) angeordnet ist, um mindestens eines von einer zeitlichen Reihenfolge und einem Chirp von mindestens einem der ersten und zweiten Laserpulse (A, B) einzustellen.

5. Laserpuls-Detektoreinrichtung gemäß einem der vorhergehenden Ansprüche, wobei die spektral selektive Strahltrenneinrichtung (40) mindestens eines enthält von
- einer Strahlteilereinrichtung (41), die zur spektral selektiven Aufspaltung der ersten und zweiten Signalpulse (C, D) von dem gemeinsamen Strahlengang (1) hin zu den Sensoreinheiten (31, 32) angeordnet ist, und
- einer Strahldispersionseinrichtung, insbesondere Gitter und/oder Prisma, die zur spektral selektiven Dispersion der ersten und zweiten Signalpulse (C, D) von dem gemeinsamen Strahlengang (1) hin zu den Sensoreinheiten (31, 32) angeordnet ist.

6. Laserpuls-Detektoreinrichtung gemäß einem der vorhergehenden Ansprüche, wobei die Sensoreinrichtung (30) enthält
- eine Subtraktionseinheit (33), die zur Bereitstellung des Sensorsignalausgangs durch Subtraktion von Ausgangssignalen der Sensoreinheiten (31, 32) angeordnet ist.

7. Laserpuls-Detektoreinrichtung gemäß einem der vorhergehenden Ansprüche, des Weiteren enthaltend
- eine Einstelleinrichtung (50), die zur Einstellung der zeitlichen Beziehung der ersten und zweiten Laserpulse (A, B) angeordnet ist, und
- eine Aktivstabilisierungs-Einheit (60), die zwischen der Sensoreinrichtung (30) und der Einstelleinrichtung (50) zur Erzeugung eines Ansteuersignals angeordnet ist.

8. Laserpuls-Detektoreinrichtung gemäß Anspruch 7, wobei
- die Aktivstabilisierungs-Einheit (60) eine Rückkopplungseinheit ist, die zur Erzeugung des Ansteuersignals in Abhängigkeit von der Intensitätsdifferenz der ersten und zweiten Signalpulse (C, D) so angeordnet ist, dass die ersten und zweiten Laserpulse (A, B) koinzidieren oder eine vorbestimmte relative Zeitverzögerung aufweisen.

9. Laserpuls-Detektoreinrichtung gemäß Anspruch 7 oder 8, wobei die Einstelleinrichtung (50) mindestens eines enthält von
- einer optischen Verzögerungsleitung (51), die in einem Eingangsweg von einem der ersten und zweiten Laserpulse (A, B) angeordnet ist, und
- einer Repetitionsraten-Steuereinrichtung, die zur Steuerung einer Repetitionsrate einer Laserquelleneinrichtung angeordnet ist, die einen der ersten und zweiten Laserpulse (A, B) erzeugt.

10. Laservorrichtung (200), umfassend
- eine erste Laserquelleneinrichtung (210), die zur Erzeugung einer Sequenz von ersten Laserpulsen (A) angeordnet ist,
- eine zweite Laserquelleneinrichtung (220), die zur Erzeugung einer Folge von zweiten Laserpulsen (B) angeordnet ist, und
- eine Laserpuls-Detektoreinrichtung (100) gemäß einem der vorhergehenden Ansprüche, die zur Bestimmung der zeitlichen Beziehung der ersten Laserpulse (A) und der zweiten Laserpulse (B) angeordnet ist.

11. Laservorrichtung gemäß Anspruch 10, wobei
- die erste Laserquelleneinrichtung (210) ein Pump-Lasersystem umfasst, das zur Erzeugung einer Folge von Pump-Laserpulsen angeordnet ist, welche die ersten Laserpulse (A) bereitstellen,
- die zweite Laserquelleneinrichtung (220) ein Seed-Lasersystem umfasst, das zur Erzeugung einer Folge von Seed-Laserpulsen angeordnet ist, welche die zweiten Laserpulse (B) bereitstellt, und
- die Laservorrichtung (200) weiterhin eine Verstärkerkristalleinrichtung (230) enthält, die zur Erzeugung einer Folge von verstärkten Signal- und Idler-Pulsen durch eine optisch nichtlineare Wechselwirkung der Pump- und Seed-Pulse angeordnet ist.

12. Laservorrichtung gemäß Anspruch 10, wobei
- die erste Laserquelleneinrichtung (210) mindestens einen ersten optisch parametrischen Verstärker, speziell Chirp-Puls-Verstärker, umfasst, der zur Erzeugung der Folge von ersten Laserpulsen (A) angeordnet ist,
- die zweite Laserquelleneinrichtung (220) mindestens einen zweiten optisch parametrischen Verstärker, speziell Chirp-Puls-Verstärker, umfasst, der zur Erzeugung der Folge von zweiten Laserpulsen (B) angeordnet ist, und
- die Laservorrichtung für eine kohärente Kombination der ersten und zweiten Laserpulse (A, B) konfiguriert ist.

13. Laserpuls-Detektionsverfahren zur Bestimmung einer zeitlichen Beziehung eines ersten Laserpulses (A) und eines zweiten Laserpulses (B), umfassend
- Überlappung des ersten und zweiten Laserpulses (A, B) auf einem gemeinsamen Strahlengang (1),
- Erzeugung eines ersten Signalpulses (C) und eines zweiten Signalpulses (D) mit unterschiedlichen spektralen Eigenschaften durch optisch nichtlineare Wechselwirkungen der ersten und zweiten Laserpulse (A, B) entlang des gemeinsamen Strahlenganges (1), wobei eine Intensitätsdifferenz der ersten und zweiten Signalpulse (C, D) von der zeitlichen Beziehung der ersten und zweiten Laserpulse (A, B) abhängt und wobei eine Mittenwellenlänge des ersten Signalpulses (C) von einer Mittenwellenlänge des zweiten Signalpulses (D) abweicht, und
- Erfassung der Intensitätsdifferenz der ersten und zweiten Signalpulse (C, D) in verschiedenen Sensorstrahlengängen (1A, 1B), wobei
- die ersten und zweiten Signalpulse (C, D) in Abhängigkeit von deren Mittenwellenlängen spektral getrennt und auf die verschiedenen Sensorstrahlengänge (1A, 1B) gerichtet werden, bevor die Intensitätsdifferenz der ersten und zweiten Signalpulse (C, D) detektiert wird.

14. Verfahren gemäß Anspruch 13, enthaltend den weiteren Schritt
- Einstellung der zeitlichen Beziehung der ersten und zweiten Laserpulse (A, B) in Abhängigkeit von der Intensitätsdifferenz der ersten und zweiten Signalpulse (C, D).

15. Verfahren gemäß Anspruch 13 oder 14, wobei
- die ersten und zweiten Signalpulse (C, D) mit getrennten nichtlinearen Kristallen, die entlang des gemeinsamen Strahlengangs (1) angeordnet sind, oder mit einem einzigen nichtlinearen Kristall, insbesondere einem gechirpten, periodisch gepolten nichtlinearen Kristall, erzeugt werden.

16. Verfahren gemäß einem der Ansprüche 13 bis 15, wobei
- die optisch nichtlineare Wechselwirkung der ersten und zweiten Laserpulse (A, B) mit einer derartigen Konversionseffizienz durchgeführt wird, dass die zeitlichen Profile der ersten und zweiten Laserpulse (A, B) während der optisch nichtlinearen Wechselwirkung der ersten und zweiten Laserpulse (A, B) nicht verändert werden.

17. Verfahren gemäß einem der Ansprüche 13 bis 16, wobei
- mindestens einer der ersten und zweiten Laserpulse (A, B) ein gechirpter Puls ist.

18. Verfahren gemäß einem der Ansprüche 13 bis 17, weiterhin enthaltend
- eine Einstellung von mindestens einem von der zeitlichen Reihenfolge und dem Chirp von mindestens einem der ersten und zweiten Laserpulse (A, B).

19. Verfahren gemäß einem der Ansprüche 14 bis 18, wobei
- der Schritt der Einstellung der zeitlichen Beziehung der ersten und zweiten Laserpulse (A, B) unter Verwendung einer Aktivstabilisierungs-Einheit (60), insbesondere in Abhängigkeit von der Intensitätsdifferenz der ersten und zweiten Signalpulse (C, D), so durchgeführt wird, dass die ersten und zweiten Laserpulse (A, B) koinzidieren oder eine vorbestimmte relative Verzögerung aufweisen.

20. Verfahren gemäß einem der Ansprüche 14 bis 19, wobei
- der Schritt der Einstellung der zeitlichen Beziehung der ersten und zweiten Laserpulse (A, B) unter Verwendung mindestens einer optischen Verzögerungsleitung, die in einem Eingangsweg von einem der ersten und zweiten Laserpulse (A, B) angeordnet ist, und einer Repetitionsratensteuervorrichtung durchgeführt wird, die zur Steuerung einer Repetitionsrate einer Laserquelleneinrichtung, die einen der ersten und zweiten Laserpulse (A, B) erzeugt, angeordnet ist.

21. Verfahren zur Verwendung einer Laserpuls-Detektoreinrichtung gemäß einem der Ansprüche 1 bis 9 für
- eine Einstellung der zeitlichen Beziehung von Pump- und Seed-Pulsen für die optisch parametrische Verstärkung, speziell Chirp-Puls-Verstärkung, oder
- eine Einstellung der zeitlichen Beziehung Laserpulsen, die kohärent addiert werden.

## Revendications

1. Dispositif détecteur d'impulsions laser (100) configuré pour déterminer une relation temporelle entre une première impulsion laser (A) et une seconde impulsion laser (B), comprenant
- un dispositif combinateur de faisceau (10) agencé pour superposer les première et seconde impulsions laser (A, B) sur un trajet de faisceau commun (1),
- un dispositif à cristal non linéaire (20) agencé pour créer une première impulsion de signal (C) et une seconde impulsion de signal (D) par des interactions optiquement non linéaires des première et seconde impulsions laser (A, B) le long du trajet de faisceau commun (1), dans lequel une différence d'intensité entre les première et seconde impulsions de signal (C, D) dépend de la relation temporelle des première et seconde impulsions laser (A, B), dans lequel les première et seconde impulsions de signal (C, D) ont des propriétés spectrales différentes et une longueur d'onde centrale de la première impulsion de signal (C) diffère d'une longueur d'onde centrale de la seconde impulsion de signal (D),
- un dispositif de capteur (30) comportant deux unités de capteur (31, 32), agencées chacune dans un trajet de faisceau de capteur différent (1A, 1B) pour détecter l'une des première et seconde impulsions de signal (C, D), dans lequel le dispositif de capteur (30) est adapté pour fournir une sortie de signal de capteur déterminée par la différence d'intensité entre les première et seconde impulsions de signal (C, D), et
- un dispositif séparateur de faisceau par sélectivité spectrale (40) est agencé entre le dispositif à cristal non linéaire (20) et les deux unités de capteur (31, 32) du dispositif de capteur (30),
dans lequel
- le dispositif séparateur de faisceau par sélectivité spectrale (40) est agencé pour séparer par spectre les première et seconde impulsions de signal (C, D) en fonction de leurs longueurs d'onde centrales et diriger les première et seconde impulsions de signal séparées par spectre sur les trajets de faisceau de capteur différents (1A, 1B).

2. Dispositif de détection d'impulsions laser selon la revendication 1, dans lequel le dispositif à cristal non linéaire (20) comporte
- un premier cristal non linéaire (21) configuré pour créer la première impulsion de signal (C), et
- un second cristal non linéaire (22) configuré pour créer la seconde impulsion de signal (D), dans lequel
- les premier et second cristaux non linéaires (21, 22) sont agencés le long du trajet de faisceau commun (1).

3. Dispositif de détection d'impulsions laser selon la revendication 1, dans lequel le dispositif à cristal non linéaire (20) comporte
- un seul cristal non linéaire avec plusieurs sections de polarisation différentes, configuré pour créer à la fois la première et la seconde impulsion de signal (C, D).

4. Dispositif de détection d'impulsions laser selon l'une quelconque des revendications précédentes, comprenant en outre
- au moins un élément dispersif (23, 24) agencé le long du trajet de faisceau commun (1) pour régler au moins l'un parmi un ordre chronologique et une compression d'impulsion d'au moins l'une des première et seconde impulsions laser (A, B).

5. Dispositif de détection d'impulsions laser selon l'une quelconque des revendications précédentes, dans lequel le dispositif séparateur de faisceau par sélectivité spectrale (40) comporte au moins l'un parmi
- un dispositif diviseur de faisceau (41) agencé pour diviser par sélectivité spectrale les première et seconde impulsions de signal (C, D) du trajet de faisceau commun (1) vers les unités de capteur (31, 32), et
- un dispositif de dispersion de faisceau, en particulier un réseau et/ou un prisme, agencé pour disperser par sélectivité spectrale les première et seconde impulsions de signal (C, D) du trajet de faisceau commun (1) vers les unités de capteur (31, 32).

6. Dispositif de détection d'impulsions laser selon l'une quelconque des revendications précédentes, dans lequel le dispositif de capteur (30) comporte
- une unité de soustraction (33) agencée pour fournir la sortie de signal de capteur en soustrayant des signaux de sortie des unités de capteur (31, 32).

7. Dispositif de détection d'impulsions laser selon l'une quelconque des revendications précédentes, comprenant en outre
- un dispositif de réglage (50) agencé pour régler la relation temporelle des première et seconde impulsions laser (A, B), et
- une unité de stabilisation active (60) agencée entre le dispositif de capteur (30) et le dispositif de réglage (50) pour créer un signal d'excitation.

8. Dispositif de détection d'impulsions laser selon la revendication 7, dans lequel
- l'unité de stabilisation active (60) est une unité de rétroaction agencée pour créer le signal d'excitation en fonction de la différence d'intensité entre les première et seconde impulsions de signal (C, D) de sorte que les première et seconde impulsions laser (A, B) coïncident ou aient un temps de retard relatif prédéterminé.

9. Dispositif de détection d'impulsions laser selon la revendication 7 ou 8, dans lequel le dispositif de réglage (50) comporte au moins l'un parmi
- une ligne de retard optique (51) agencée sur un trajet d'entrée de l'une des première et seconde impulsions laser (A, B), et
- un dispositif de commande de taux de répétition agencé pour commander un taux de répétition d'un dispositif de source laser créant l'une des première et seconde impulsions laser (A, B).

10. Appareil laser (200), comprenant
- un premier dispositif de source laser (210) agencé pour créer une séquence de premières impulsions laser (A),
- un second dispositif de source laser (220) agencé pour créer une séquence de secondes impulsions laser (B), et
- un dispositif de détection d'impulsions laser (100) selon l'une quelconque des revendications précédentes agencé pour déterminer la relation temporelle des premières impulsions laser (A) et des secondes impulsions laser (B).

11. Appareil laser selon la revendication 10, dans lequel
- le premier dispositif de source laser (210) comprend un système de laser de pompage agencé pour créer une séquence d'impulsions laser de pompage fournissant les premières impulsions laser (A),
- le second dispositif de source laser (220) comprend un système de laser d'ensemencement agencé pour créer une séquence d'impulsions laser d'ensemencement fournissant les secondes impulsions laser (B), et
- l'appareil laser (200) comporte en outre un dispositif à cristal amplificateur (230) agencé pour créer une séquence d'impulsions de signal amplifié et d'impulsions Idler par une interaction optiquement non linéaire des impulsions de pompage et d'ensemencement.

12. Appareil laser selon la revendication 10, dans lequel
- le premier dispositif de source laser (210) comprend au moins un premier amplificateur paramétrique optique, d'impulsions spécialement comprimées, agencé pour créer la séquence des premières impulsions laser (A),
- le second dispositif de source laser (220) comprend au moins un second amplificateur paramétrique, d'impulsions spécialement comprimées, agencé pour créer la séquence des secondes impulsions laser (B), et
- l'appareil laser est configuré pour une combinaison cohérente des premières et secondes impulsions laser (A, B).

13. Procédé de détection d'impulsions laser pour déterminer une relation temporelle d'une première impulsion laser (A) et d'une seconde impulsion laser (B), comprenant
- la superposition des première et seconde impulsions laser (A, B) sur un trajet de faisceau commun (1),
- la création d'une première impulsion de signal (C) et d'une seconde impulsion de signal (D) avec des propriétés spectrales différentes par des interactions optiquement non linéaires des première et seconde impulsions laser (A, B) le long du trajet de faisceau commun (1), dans lequel une différence d'intensité entre les première et seconde impulsions de signal (C, D) dépend de la relation temporelle des première et seconde impulsions laser (A, B) et dans lequel une longueur d'onde centrale de la première impulsion de signal (C) diffère d'une longueur d'onde centrale de la seconde impulsions de signal (D), et
- la détection de la différence d'intensité entre les première et seconde impulsions de signal (C, D) sur des trajets de faisceau de capteur différents (1A, 1B), dans lequel
- les première et seconde impulsions de signal (C, D) sont séparées par spectre en fonction de leurs longueurs d'onde centrales et dirigées sur les trajets de faisceau de capteur différents (1A, 1B) avant de détecter la différence d'intensité entre les première et seconde impulsions de signal (C, D).

14. Procédé selon la revendication 13, comportant une étape supplémentaire consistant à
- régler la relation temporelle des première et seconde impulsions laser (A, B) en fonction de la différence d'intensité entre les première et seconde impulsions de signal (C, D).

15. Procédé selon la revendication 13 ou 14, dans lequel
- les première et seconde impulsions de signal (C, D) sont créées avec des cristaux non linéaires séparés agencés le long du trajet de faisceau commun (1) ou avec un seul cristal non linéaire, en particulier un cristal non linéaire périodiquement polarisé comprimé.

16. Procédé selon l'une quelconque des revendications 13 à 15, dans lequel
- l'interaction optiquement non linéaire des première et seconde impulsions laser (A, B) est menée avec une efficacité de conversion de sorte que des profils temporels des première et seconde impulsions laser (A, B) ne sont pas modifiés pendant l'interaction optiquement non linéaire des première et seconde impulsions laser (A, B).

17. Procédé selon l'une quelconque des revendications 13 à 16, dans lequel
au moins l'une des première et seconde impulsions laser (A, B) est une impulsion comprimée.

18. Procédé selon l'une quelconque des revendications 13 à 17, comprenant en outre
- le réglage d'au moins l'un parmi un ordre chronologique et une compression d'impulsion d'au moins l'une des première et seconde impulsions laser (A, B).

19. Procédé selon l'une quelconque des revendications 14 à 18, dans lequel
- l'étape consistant à régler la relation temporelle des première et seconde impulsions laser (A, B) est menée en utilisant une unité de stabilisation active (60), en particulier en fonction de la différence d'intensité entre les première et seconde impulsions de signal (C, D) de sorte que les première et seconde impulsions laser (A, B) coïncident ou aient un retard relatif prédéterminé.

20. Procédé selon l'une quelconque des revendications 14 à 19, dans lequel
- l'étape consistant à régler la relation temporelle des première et seconde impulsions laser (A, B) est menée en utilisant au moins l'un parmi une ligne de retard optique agencée sur un trajet d'entrée de l'une des première et seconde impulsions laser (A, B) et un dispositif de commande de taux de répétition agencé pour commander un taux de répétition d'un dispositif de source laser créant l'une des première et seconde impulsions laser (A, B).

21. Procédé d'utilisation d'un dispositif de détection d'impulsions laser selon l'une quelconque des revendications 1 à 9 pour
- régler la relation temporelle d'impulsions de pompage et d'ensemencement pour une amplification paramétrique optique, d'impulsions spécialement comprimées, ou
- régler la relation temporelle d'impulsions laser ajoutées de manière cohérente.
